# EUROPEAN PATENT APPLICATION

(11) **EP 1 065 394 A1**
(43) Date of publication of application: **03.01.2001**
(21) Application number: 99830420.8
(22) Date of filing: 01.07.1999
(51) Int. Cl.: F16C 23/00, F16C 33/72, F16C 35/067

(54) **Flanged bearing housing for a shaft in a machine in general and a food-industry machine in particular**

(71) Applicant: Rexnord Marbett S.p.A., 42015 Correggio (Reggio Emilia) (IT)
(72) Inventor: Cozza, Riccardo, 41030 San Prospero - Modena (IT)
(74) Representative: Perani, Aurelio

(57) **Abstract**

A hygienically beneficial flanged bearing housing (1) for a shaft (4) in a machine in general and in a food-industry machine in particular, comprises a body (6) containing a seat (9) for a self-aligning bearing (10), a metal cover (11) which fits over the body (6), and packing (25) in vulcanized nitrile rubber inserted as a seal between the body (6) and the cover (11) by compression moulding.

## Description

The present invention relates to a flanged bearing housing for a shaft in a machine in general and in a food-industry machine in particular, of the type that comprises a body containing a seat for a self-aligning bearing and a metal cover which fits over the body.

As is known, in the food industry and in particular in the context of a machine for the food industry, such as for example a machine for the conveyance of food products in the course of packaging, there is a need to provide rotary support in a machine frame for a large number of shafts, whether these are idle shafts or shafts driven by drive means.

Bearing housings of the type specified above are known for this purpose and available on the market in a wide range of sizes. They are advantageous in many respects, such as having an external surface compatible with the food environment, thanks to the metal cover, preferably made of stainless steel, and being easy to fit to the machine frame, thanks to the self-aligning bearing which permits not-too-strict machining tolerances.

Although widely used, these bearing housings are not completely satisfactory from the point of view of hygiene, it having been found that, during machine operation, in the long run, dirt collects inside the bearing housings together with washing water containing detergents, as a result of periodical machine cleaning operations. This dirt and water is unhygienic as it makes the bearing housing a home for bacilli.

It has been suggested, in accordance with design practice, that labyrinths and gaskets, which are known per se, should be used, but these significantly complicate the structure of the housing and only very slightly alleviate the difficulty described above.

The problem addressed by the present invention is that of devising a bearing housing of the type specified that has structural and functional characteristics such as to overcome the abovementioned difficulty.

This problem is solved by a support of the type specified, characterized in that it comprises packing inserted as a seal between the body and the cover.

Other features and the advantages of the bearing housing according to the present invention will be seen in the following description of a preferred illustrative embodiment thereof. This is given by way of non-restrictive indication and refers to the accompanying figures, in which:

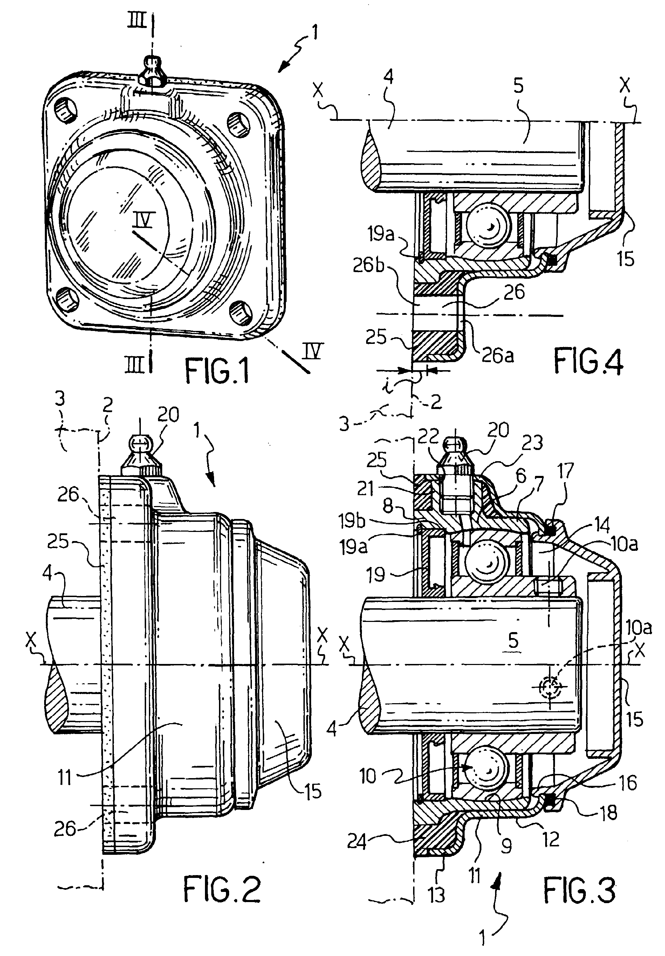

- Figure 1 is a perspective view of a bearing housing according to the invention,
- Figure 2 is a side view of the bearing housing of Figure 1,
- Figure 3 is a sectional view through the bearing housing of Figure 1, taken on III-III, and
- Figure 4 is a sectional view of a detail of the bearing housing of Figure 1, taken on IV-IV.

With reference to the accompanying figures, the number 1 is a general reference for a bearing housing intended to be fixed to a surface 2 of a frame 3 of a machine in general and of a machine for the food industry in particular, for the purpose of supporting a shaft 4, of axis X-X, specifically, in this example, for supporting one end 5 of the shaft 4.

The bearing housing 1 comprises a body 6 that has an annular portion 7 and an essentially circular end flange 8. The body 6 is preferably made from a plastic material, for example it may be made from polyamide.

An essentially spherical seat 9 is formed in the body 6 to take a self-aligning bearing, having the general reference 10, for the self-aligning housing of the shaft 4. In other words, the axis X-X of the shaft 4 may even be not quite perpendicular to the surface 2 of the machine frame, without this fact comprising the functioning of the housing.

The bearing 10 is held to the shaft by two grub screws 10a at an angle of 120° from each other. The bearing 10 is of the sealed type because of the presence of sealing walls 10b.

The bearing housing 1 comprises a cover 11, made by drawing a sheet of stainless steel, with a thickness of about 1.5-2 mm. The cover 11 has an annular portion 12 (which fits over the annular portion 7 of the body 6) and encloses the circular flange 8 with a square flange 13 which extends almost as far as the end of the body 6 that is to be placed against the surface 2 of the machine frame 3.

More specifically, between the edge of the flange 13 and the end of the body 6 is a distance, marked "i", of e.g. 2 mm.

A circular opening 14 is formed coaxially in the cover, its diameter being sufficient for the shaft 4 to pass through if the shaft 4 is to be supported at an intermediate point rather than at its end 5.

A snap-on cap 15 is provided to seal off the opening 14. For this purpose the cap 15 has a flanged lip 16 and a seal 17 in a seat 18.

Between the bearing 10 and the machine frame is a sealing ring 19 extending radially between the shaft 4 and the body 6. It is held between an elastic ring 19a and a shoulder 19b formed on the body 6.

A fixed-type oiler 20 is provided to take oil for lubrication of the bearing, screwed down into an upstand 21, passing on its way through a hole 22 in a dome 23 formed in the cover 11 to enclose the upstand 21.

In the bearing housing 1, between the body 6 and the cover 11 a gap 24 is formed. The housing 1 according to the invention comprises packing 25 which is inserted to form a seal inside the gap 24, that is, it is inserted in such a way that the space of the gap 24 is completely occupied by the packing 25.

The packing 25 is an elastomer. The elastomer is preferably a vulcanized nitrile rubber.

The packing 25 is produced by compression moulding.

To fix the bearing housing 1 to the machine frame 3, four screws (not shown in the figure) are to be used: these pass through four corresponding through holes 26 formed in the corners of the flange 13. These holes 26 are composed of a section 26a passing through the cover 11, and a section 26b passing through the packing 25. The section 26b of the holes 26 is produced by the action of producing the packing 25 by compression moulding.

When the bearing housing 1 is being fixed to the surface 2 of the machine frame 3 using the abovementioned screws (not shown in the figures), the packing 25 occupies all the spaces between the end of the body 6 and the cover 11, preventing any impurity or liquid from settling inside the housing.

The main advantage of the bearing housing according to the present invention is the unusually high level of hygiene achieved.

Another advantage of the bearing housing according to the present invention is that it is structurally simple, and is therefore suitable for manufacture in large numbers.

It should also be noted that the bearing housing according to the present invention has been found to work beneficially from the point of view of vibration damping and from the point of view of quiet running.

Not the least advantage is that the bearing housing according to the invention is structurally robust, owing to the fact that the body, covering and packing together form a substantially monolithic unit.

Clearly, in order to overcome particular and specific demands, a person skilled in the art could make numerous modifications and alterations to the bearing housing described above, which would all remain within the scope of protection of the invention as defined in the following claims.

## Claims

1. Flanged bearing housing (1) for a shaft (4) in a machine in general and in a food-industry machine in particular, of the type that comprises a body (6) containing a seat (9) for a self-aligning bearing (10) and a metal cover (11) which fits over the body (6), the bearing housing being characterized in that it comprises packing (25) inserted as a seal between the body (6) and the cover (11).

2. Flanged bearing housing (1) according to Claim 1, characterized in that the packing (25) is an elastomer.

3. Flanged bearing housing (1) according to Claim 2, characterized in that the elastomer is a vulcanized nitrile rubber.

4. Flanged bearing housing (1) according to Claim 2, characterized in that the packing (25) is produced by moulding.

5. Flanged bearing housing (1) according to Claim 4, characterized in that the moulding process is compression moulding.
